(19) Europäisches Patentamt
European Patent Office
Office européen des brevets

(11) **EP 2 651 051 A1**

(12) **EUROPEAN PATENT APPLICATION**

(43) Date of publication:
**16.10.2013 Bulletin 2013/42**

(51) Int Cl.:
***H04B 10/60*** *(2013.01)*

(21) Application number: **12305439.7**

(22) Date of filing: **13.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Salsi, Massimiliano**
**75013 Paris (FR)**

• **Ghazisaeidi, Amirhossein**
**75015 Paris (FR)**
• **Serena, Paolo**
**43100 Parma (IT)**

(74) Representative: **MERH-IP**
**Matias Erny Reichl Hoffmann**
**Paul-Heyse-Strasse 29**
**80336 München (DE)**

Remarks:
Amended claims in accordance with Rule 137(2) EPC.

(54) **Nonlinear Cross-Polarization Mitigation Algorithm**

(57) The present document relates to optical transmission systems. In particular, the present document relates to methods and systems for the mitigation of Cross-Polarization Modulation (XPOLM) in optical transmission systems. A coherent optical receiver (200) adapted to receive an optical signal transmitted over an optical transmission channel exhibiting XPOLM is described. The received optical signal comprises a first polarization component and a second polarization component. The first and second polarization components comprise sequences of $M^{ary}$ phase shift keying, referred to as MPSK, symbols, respectively, M being an integer, with M > 2. The coherent optical receiver (200) comprises a conversion and processing unit (201, 202) adapted to generate a set of digital signals based on the received optical signal; a polarization de-multiplexing unit (203) adapted to de-multiplex the set of digital signals into a first two dimensional, referred to as complex, component in a first polarization axis and a second complex component in a second polarization axis; and an XPOLM compensation unit (204) adapted to transform the first and second complex components into the Stokes space, thereby yielding a set of Stokes parameters; determine a rotation of the first and second polarization axes based on the set of Stokes parameters; and determine XPOLM compensated first and second complex components by transforming the first and second complex components in accordance to the determined rotation of the first and second polarization axes.

Fig. 2a

EP 2 651 051 A1

**Description**

**Technical Field**

The present document relates to optical transmission systems. In particular, the present document relates to methods and systems for the mitigation of Cross-Polarization Modulation (XPOLM) in optical transmission systems.

**Background**

Optical transmission systems using polarization division multiplexing (PDM) or polarization switching (PS) can be limited by a nonlinear effect called cross-polarization modulation (XPOLM). In particular XPOLM may be a limiting effect when using the PDM-BPSK (Binary Phase Shift Keying), PDM-QPSK (Quadrature Phase Shift Keying) or PS-QPSK modulation format over existing submarine cables based on (non-zero dispersion shifter fiber) NZ-DSF cables.

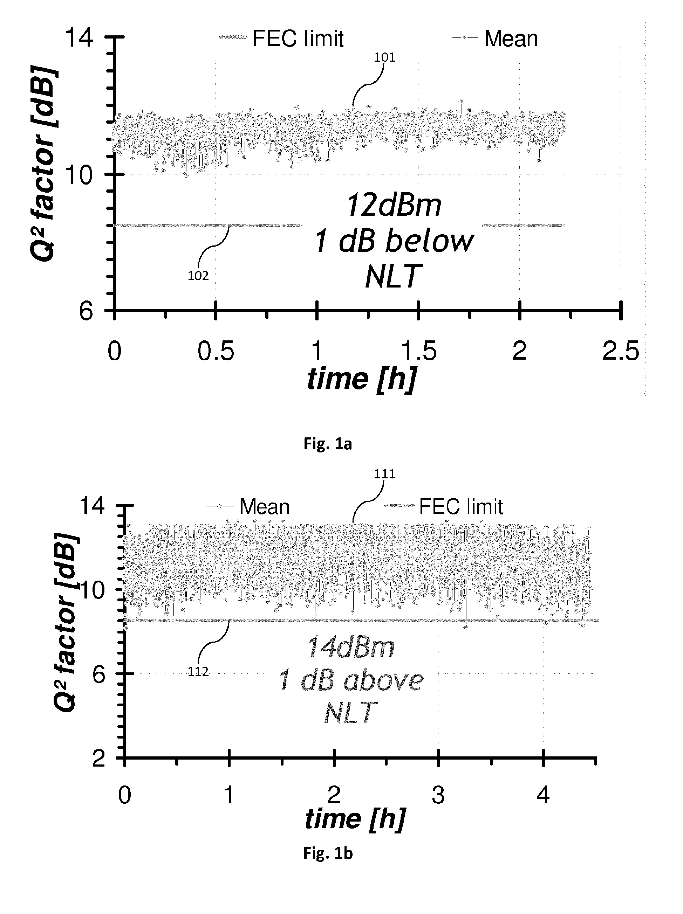

Figs. 1a and 1b show the effects of cross-polarization modulation on a PDM-BPSK signal at 40Gbit/s over a typical dispersion managed optical transmission link. In the context of Fig. 1a the power of the injected optical signal is 1dB below the nonlinear threshold (NLT), and in the context of Fig. 1b the injected power is 1dB higher than the NLT. Both Figs. indicate the Forward Error Correction (FEC) limit 102, 112. When the power of the optical signal is higher than the NLT, XPOLM becomes a dominant distortion effect, with an impact on the $Q^2$-factor stability which can be seen from the increased variance of the $Q^2$-factor 111 in Fig. 1b compared to the $Q^2$-factor 101 in Fig. 1a.
In view of the above, there is a need for mitigating the effects of XPOLM at the optical receiver of an optical transmission system.

**Summary**

According to an aspect a coherent optical receiver is described. The coherent optical receiver is adapted to receive an optical signal transmitted over an optical transmission channel exhibiting cross polarization modulation (XPOLM). In particular, the coherent optical receiver is adapted to mitigate distortions (e.g. polarization rotations) caused by XPOLM. The received optical signal typically comprises a first polarization component and a second polarization component. By way of example, the received optical signal may be a polarization division multiplexed (PDM) or a polarization switched (PS) signal. The first and second polarization components may comprise sequences of M-ary phase shift keying (MPSK) symbols, respectively, M being an integer, with M > 2.
The coherent optical receiver may comprise a conversion and processing unit adapted to generate a set of digital signals based on the received optical signal. The conversion and processing unit may comprise a coherent mixer and photodiodes for converting the received optical signal into a set of analog signals. A plurality of Analog to Digital Converters (ADC) may be used to convert the set of analog signals into the set of digital signals. Furthermore, the conversion and processing unit may comprise a digital signal processor in order to process the set of digital signals, e.g. for compensating chromatic dispersion (CD). As such, the set of digital signals may be CD compensated.
The coherent optical receiver may further comprise a polarization de-multiplexing unit adapted to de-multiplex the set of digital signals into a first, e.g. two dimensional (2D), component in a first polarization axis and a second , e.g. 2D, component in a second polarization axis. The first and second polarization axes may be substantially orthogonal with respect to one another. The first and second components may be first and second complex components. The first component may comprise a sequence of (succeeding) first complex samples at succeeding time instants k, k=1,...,K, K being an integer, K>1. In a similar manner, the second complex component may comprise a sequence of second complex samples at the succeeding time instants k.
Furthermore, the coherent optical receiver comprises an XPOLM compensation unit. The XPOLM compensation unit is adapted to transform the first and second complex components into the Stokes space, thereby yielding a set of Stokes parameters. By way of example, the first and second complex components may be complex components $X_k$ and $Y_k$. The set of Stokes parameters may comprise one or more of $S_{1,k}$, $S_{2,k}$, $S_{3,k}$ defined as follows

$$S_{0,k} = \left|X_k\right|^2 + \left|Y_k\right|^2$$

$$S_{1,k} = \left(\left|X_k\right|^2 - \left|Y_k\right|^2\right)\Big/ S_{0,k}$$

$$S_{2,k} = 2 \operatorname{Re}\left\{X_k Y_k^*\right\}/S_{0,k}$$

$$S_{3,k} = -2 \operatorname{Im}\left\{X_k Y_k^*\right\}/S_{0,k}$$

As such, the XPOLM compensation unit may be configured to determine a sequence of sets of Stokes parameters $S_{1,k}$, $S_{2,k}$ and/or $S_{3,k}$ at the time instants k from the sequences of first and second samples $X_k$ and $Y_k$ at the time instants k, respectively.

The first and second complex components may be represented in the Jones space. A number of loci of the sequence of MPSK symbols in the Stokes space may be reduced compared to a number of loci in the Jones space. In other words, the MPSK symbols may be mapped to a reduced number of points in the Stokes space (compared to the number of points in the Jones space). This many-to-few mapping may be advantageous for determining reliable statistics from the sequences of first and second complex samples within relatively short time intervals, thereby allowing for the tracking and compensation of XPOLM induced distortions (rotations).

The XPOLM compensation unit may be further adapted to determine a rotation of the first and second polarization axes or components based on the set of Stokes parameters. In particular, the XPOLM compensation unit may be adapted to determine rotations of the first and second polarization axes at the time instants k based on the sequence of sets of Stokes parameters at the time instants k, k-1, ..., k-N, where N is the length of the observation window. For this purpose, the XPOLM compensation unit may be adapted to perform a statistical analysis of the sequence of sets of Stokes parameters. By way of example, the XPOLM compensation unit may be adapted to determine covariance coefficients from the set of Stokes parameters and use the covariance coefficients for an eigenvector /eigenvalue analysis.

The XPOLM compensation unit may be configured to determine XPOLM compensated first and second complex components by rotating the first and second complex components in accordance to the determined rotation of the first and second polarization axes. In particular, the XPOLM compensation unit may be configured to determine sequences of XPOLM compensated first and second complex samples at the time instants k by rotating the sequences of first and second complex samples at the time instants k in accordance to the determined rotation of the first and second polarization axes at the time instants k, respectively. In other words, the XPOLM compensation unit may be configured to rotate first and second complex samples at a particular time instant k using a rotation determined based on statistics determined for the particular time instant k. The statistics may be solely determined based on the received optical signal without the use of any feedback or training scheme. As a result, the XPOLM compensation unit is adapted to compensate the relatively fast varying XPOLM distortions (rotations).

The set of Stokes parameters may span a multi-dimensional Stokes space. The XPOLM compensation unit may be adapted to fit a subspace to the sequence of sets of Stokes parameters, wherein the fitted subspace has a lower dimension than the Stokes space. By way of example, the subspace may be a complex plane (e.g. in the case of MPSK, with M>2) or the subspace may be a 1D line (e.g. in the case of BPSK or PS-QPSK). The XPOLM compensation unit may be adapted to determine the rotations of the first and second polarization axes based on the fitted subspace, e.g. based on the 2D plane or the 1D line.

As indicated above, the XPOLM compensation unit may be adapted to determine covariance coefficients of the Stokes parameters at the time instants k based on the sequence of sets of Stokes parameters at the time instants k. Furthermore, the XPOLM compensation unit may be adapted to determine an eigenvector of a covariance matrix of the Stokes parameters at the time instants k based on the determined covariance coefficients at the time instants k. In this context, the XPOLM compensation unit may be adapted to disambiguate a direction of the determined eigenvector at succeeding time instants, thereby preventing an uncontrolled oscillation of the direction of the eigenvector (and the resulting rotation). The covariance coefficients may be determined using a moving average across N time instants, wherein N is typically smaller than K. Typically N is selected based on a speed of variations incurred by XPOLM. By way of example, the XPOLM compensation unit may be adapted to determine an autocorrelation function of at least one of the Stokes parameters for a plurality of different time lags. The number N of time instants (or the length of the time interval for determining the covariance coefficients) may then be determined based on the autocorrelation function.

The received optical signal may be a PDM BPSK signal or a PS QPSK signal. In such cases, the XPOLM compensation unit may be adapted to determine the eigenvector of the covariance matrix as the eigenvector corresponding to a maximum eigenvalue. In another embodiment, the received optical signal may be a PDM MPSK signal with M>2. In such cases, the XPOLM compensation unit may be adapted to determine the eigenvector of the covariance matrix corresponding to the eigenvector of a minimum eigenvalue. Furthermore, the XPOLM compensation unit may be configured to determine an angle between the determined eigenvector and a default axis, as well as a rotation axis. The XPOLM compensation unit may determine the transformation or rotation of the first and second complex components based on the determined angle and the determined rotation axis in the Stokes space. In particular, the XPOLM compensation unit may determine the rotation of the first and second complex components based on the formulas provided in the detailed description part of the present document.

The XPOLM compensation unit may be adapted to determine the relative phase drift between the first and second complex components based on long-term statistics derived from the set of Stokes parameters followed by a second XPOLM compensation unit adapted to transform the first and second XPOLM compensated complex components into the Stokes space, thereby yielding a set of further Stokes parameters. The second XPOLM compensation unit may be adapted in a similar manner as the (first) XPOLM compensation unit. In particular, the second XPOLM compensation unit may be adapted to mitigate the XPOLM of the first and second complex components based on short-term statistics derived from Stokes parameters. In particular, the second XPOLM compensation unit may be adapted to determine further XPOLM compensated first and second complex components from the first and second XPOLM compensated complex components based on short-term statistics derived from the set of further Stokes parameters. The time interval considered for the long-term statistics for the relative-phase correction may be greater than the time interval considered for the short-term statistics. As such, the optical receiver may comprise a plurality of XPOLM compensation units adapted to compensate both relative phase drift and XPOLM effects at different speeds using statistics determined across different time intervals (e.g. across different numbers N of samples).

According to a further aspect, a method for mitigation cross polarization modulation (XPOLM) in a received optical signal is described. The received optical signal comprises a first polarization component and a second polarization component. The first and second polarization components comprise sequences of MPSK symbols, respectively, M being an integer, with M > 2. The method comprises generating a set of digital signals based on the received optical signal. The method proceeds in de-multiplexing the set of digital signals into a first complex component in a first polarization plane and a second complex component in a second polarization plane. Furthermore, the first and second complex components are transformed into the Stokes space, thereby yielding a set of Stokes parameters. The method proceeds in determining a transformation or rotation of the first and second polarization axes based on the set of Stokes parameters, and in determining XPOLM compensated first and second complex components by rotating the first and second complex components in accordance to the determined transformation or rotation of the first and second polarization axes.

According to a further aspect, a software program is described. The software program may be adapted for execution on a processor or hardware implementation and for performing the method steps outlined in the present document when carried out on a computing device.

According to another aspect, a storage medium is described. The storage medium may comprise a software program adapted for execution on a processor and for performing the method steps outlined in the present document when carried out on a computing device.

According to a further aspect, a computer program product is described. The computer program may comprise executable instructions for performing the method steps outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

## Short Description of the Figures

The invention is explained below in an exemplary manner with reference to the accompanying drawings, wherein

Figs. 1a and 1b illustrate the effects of cross-polarization modulation as a function of the power of the transmitted optical signal;
Fig. 2a shows a block diagram of an example optical receiver comprising an XPOLM compensation unit;
Fig. 2b shows the block diagram of an example filter bank used in a polarization demultiplexing unit;
Fig. 3 shows a block diagram of an example XPOLM compensation unit;
Figs. 4a to 4c illustrate example components of an XPOLM compensation unit;
Figs. 5a and 5b show example experimental results;
Fig. 6 illustrates the Stokes parameters $S_1$, $S_2$ and $S_3$ for PDM-QPSK (Quadrature Phase Shift Keying) signals; and
Fig. 7 illustrates the determination of an example rotation of characterizing a 3D rotation in the Stokes space.

## Detailed Description

As indicated in the background section, distortions caused by XPOLM become an important factor for the quality of an optical transmission system, notably when operating the optical transmission system at optimum power (e.g. at or above the NLT) . Various schemes for compensating XPOLM may be used. By way of example, a specific pulse carving scheme called interleaved- Return- to- Zero (iRZ) may be used. This scheme reduces XPOLM, but cannot be used to completely compensate XPOLM. Moreover this scheme makes a transponder (comprising the optical receiver) more expensive and is only suitable for high performance scenarios like submarine transmission systems. A further scheme may make use of in- line polarization mode dispersion (PMD) . However, typical submarine cables have very low PMD and PMD cannot be added to existing cables. In general, it is not possible to add PMD, such that schemes which are based on the alignment of PMD are not compatible with legacy systems. Another approach is a decision- aided XPOLM compensation DSP scheme described in Lei Li, et al, "Nonlinear Polarization Crosstalk Canceller for Dual- Polarization Digital Coherent Receivers" OFC2010, Paper OWE3. However, the performance of this scheme is limited and the $Q^2$- factor gain is upper- bounded by a relatively small value. A further approach could be to lower the injected power below the NLT. This, however, has many drawbacks. In particular, it is not always possible in existing systems to lower the injected power. Furthermore, the lowering of the injected power typically results in a suboptimal average Q- factor.

As such, there is a need for an efficient, low cost scheme for compensating XPOLM at the receiver of an optical transmission system. In the present document, it is proposed to compensate for XPOLM in the DSP of a coherent optical receiver using a blind compensation algorithm. It is proposed to analyze the nonlinear scattering caused by XPOLM on the Poincaré sphere (which is a method for representing the state of polarization of the light). Combining a geometrical interpretation and three-dimensional linear regression techniques from mathematical statistics, an algorithm capable of tracking and compensating the fast-varying XPOLM distortions is described. Particular advantages of the proposed algorithm are that the described algorithm is highly effective in terms of Q-factor gain and that the complexity of the algorithm is relative low, such that the algorithm can e.g. be implemented in an ASIC (Application-Specific Integrated Circuit). Furthermore, the algorithm is blind, i.e. the algorithm does not make use of feedback loops and no data-aided parts are required.

In the following, the system and method for compensating XPOLM is described in the context of the PDM-BPSK modulation format. It should be noted, however, that the system and method are also applicable to other modulation formats, e.g. PDM-MPSK (wherein M stands for an arbitrary integer number and wherein M indicates the number of constellation points), and PS-QPSK.

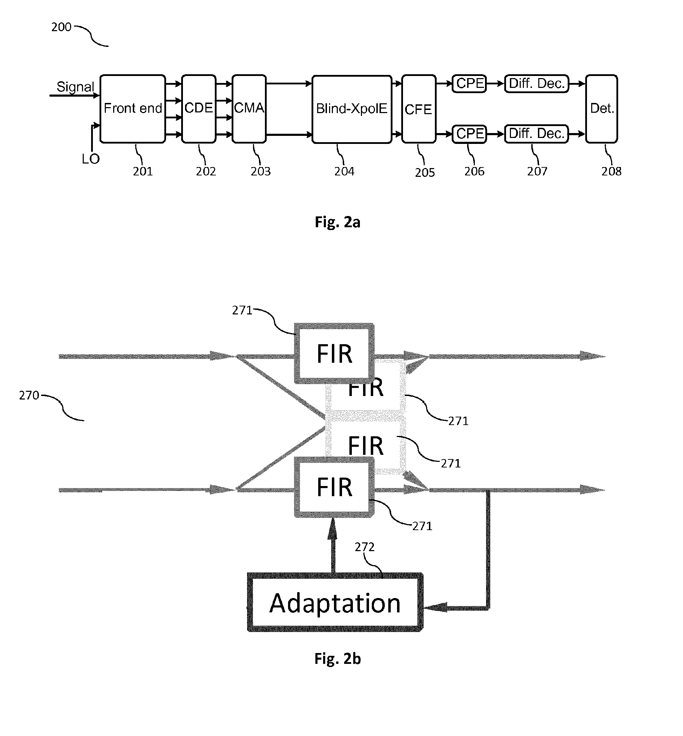

Fig. 2a illustrates an example coherent optical receiver 200. The coherent optical receiver 200 comprises a front end 201 which is configured to convert a received optical signal into a pair of complex digital signals, wherein each digital signal comprises an in-phase component and a quadrature-phase component. For this purpose, the front end 201 may comprise a coherent detector and a bank of Analog-to-Digital Converters (ADC). Furthermore, the optical receiver 200 comprises one or more digital signal processors (e.g. one or more ASICs) which process the pair of digital signals, in order to recover transmitted data in the detection unit 208. The processing of the pair of digital signals typically comprises CD compensation 202 (Chromatic Dispersion Estimation, CDE), polarization demultiplexing 203, carrier frequency estimation (CFE) 205, carrier phase estimation (CPE) 206 and differential decoding (Diff. Dec.) 207.

In other words, the optical signal received at a coherent transponder 200 goes through an optical front-end 201, where beating with a local oscillator (LO) in a coherent mixer, photo-detection, and analog-to-digital conversion is performed. The digitized signals are passed over to DSP stages comprising: chromatic dispersion estimation/compensation (CDE) 202, constant modulus algorithm (CMA) for polarization demultiplexing and equalization 203, carrier frequency estimation/correction (CFE) 205, two independent carrier phase estimation/correction blocks (CPE) 206, differential decoding 207, and detection 208.

As such, the processing at the optical receiver 200 typically comprises a polarization demultiplexing and equalization unit (Constant Modulus Algorithm, CMA) 203. The polarization demultiplexing unit 203 may comprise one or more equalization filters which are used for channel equalization and/or for polarization de- multiplexing. The polarization demultiplexing unit 203 typically comprises a bank 270 of four FIR (Finite Impulse Response) filters 271 arranged in a butterfly structure (see Fig. 2b) . The filter taps of the FIR filters 271 may be determined and adapted continuously within a feedback loop comprising an adaptation unit 272. The adaptation unit 272 may execute a CMA algorithm which continuously adapts the filter taps in a "blind" manner. In other words, the CMA algorithm determines the filter taps of the FIR filters 271 solely based on the samples of the pair of digital signals derived from the received optical signal. The filter taps are typically determined such that the filtered signal downstream of the polarization de- multiplexing unit (i.e. subsequent to filtering with the FIR filter bank 270) exhibits pre- determined signal characteristics. By way of example, for signals of unit amplitude, the CMA may try to minimize the magnitude of the error term $E = (|s_{out}|- 1)^2$ at the output of the polarization de- multiplexing unit 203,

wherein $|s_{out}|$ is the intensity (or amplitude) of an output signal $s_{out}$ of the polarization de- multiplexing unit 203. As such, the CMA algorithm operates based on the pre- determined signal characteristic regarding a fixed intensity (or amplitude) of both polarizations of the received optical signal. Among other things, the polarization demultiplexing unit 203 is configured to provide two complex digital signals at its output which are orthogonal with respect to each other.

The CMA algorithm was introduced by Godard (IEEE Tr. Comm, vol.28, no.11. pp. 1867-1875, 1980) and the description thereof is incorporated by reference. Furthermore, the CMA is discussed in the document "Digital Equalization of 40Gbit/s per Wavelength Transmission over 2480km of Standard Fiber without Optical Dispersion Compensation", S.J. Savory et al., Proceedings of ECOC 2006, Cannes, France, paper Th2.5.5, Sep. 2006. The description of the CMA in this document is hereby incorporated by reference.

Furthermore, the processing comprises a Blind XPOLM equalizer (Blind- XPolE) 204, which is also referred to herein as XPOLM compensation unit 204. In the illustrated example of Fig. 2a, the Blind- XpolE 204 is placed right after CMA 203, so the Blind- XpolE 204 does not make use of the originally detected signal for its operation. Instead, the Blind- XpolE 204 makes use of the orthogonal complex digital signals at the output of the polarization demultiplexing unit 203. As indicated above, the polarization demultiplexing unit 203 using CMA makes use of pre- determined knowledge regarding the intensity (amplitude) of the received optical signal, in order to demultiplex the two orthogonal polarization axes of the received optical signal. The CMA is typically only adapted to track relatively slow rotations of the polarization axes. As such, the CMA is typically not adapted to track and compensate distortions (i.e. rotations) caused by the rapid phenomenon of XPOLM, which leads to fast varying rotations (in the range of nano seconds) . These fast varying rotations cannot typically be tracked or compensated using a feedback scheme (as is the case of CMA) or learning loops.

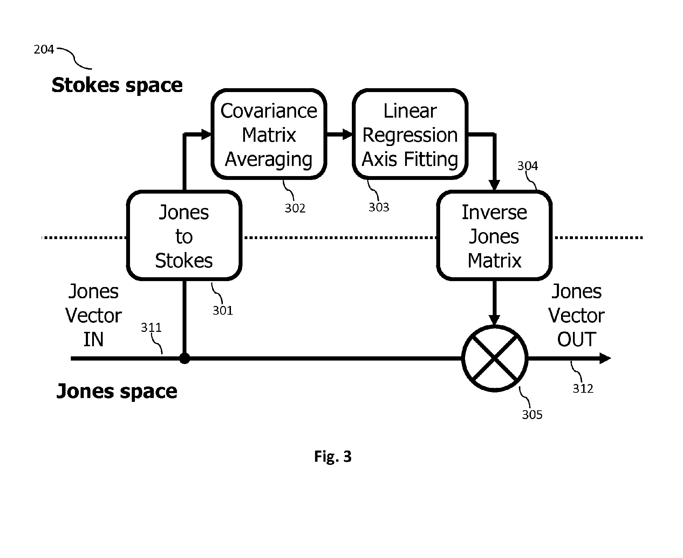

In view of the above, the XPOLM compensation unit 204 makes use of samples derived from the received optical signal without the need of a feedback loop or learning loops. As a consequence, the XPOLM compensation unit 204 is able to track and to compensate fast varying rotations of the received optical signal caused by XPOLM. Fig. 3 illustrates a high-level block diagram of an example Blind-XpolE 204. The Blind-XpolE 204 comprises a Jones-to-Stokes module 301 configured to map signals 311 from the Jones space (i.e. to transform a Jones vector) to the Stokes space (i.e. to a set of Stokes parameters or to a Stokes vector). Furthermore, the Blind-XpolE 204 comprises Covariance Matrix Averaging 302 (also referred to as a covariance determination unit 302) configured to determine Covariance statistics based on a sequence of Stokes parameters. The Covariance Matrix Averaging 302 is followed by the Linear Regression Axis Fitting 303 (also referred to as the covariance analysis unit 303) configured to calculate a least mean square line fitting the signal constellation in the Stokes space. In addition, the Blind-XpolE 204 comprises a module 304 for calculating the Inverse Jones Matrix for channel inversion into the Jones space. In particular, the Inverse Jones Matrix unit 304 (also referred to as the rotation matrix determination unit 304) determines a rotation matrix for rotating the signals 311 in the Jones space in the rotation unit 305, thereby yielding the XPOLM compensated signals 312.

Overall, the core computations for XPOLM compensation are performed in the Stokes space. This is advantageous because the number of possible input symbols 311 at the input of the XPOLM compensation unit is mapped to a reduced number of possible points in the Stokes space (compared to the Jones space), thereby enabling the determination of reliable statistics based on a reduced number of symbols, and thereby enabling the tracking and compensation of rapid variations of the rotation of the polarization of the received optical signal (caused by XPOLM) .

The input signals (or the input symbols) 311 are the two polarization tributaries $X_k$ and $Y_k$ at the output of the CMA unit 203. The two polarization tributaries $X_k$ and $Y_k$ are converted into the Stokes space using the following equations

$$S_{0,k} = \left|X_k\right|^2 + \left|Y_k\right|^2$$

$$S_{1,k} = \left(\left|X_k\right|^2 - \left|Y_k\right|^2\right)\!\Big/ S_{0,k}$$

$$S_{2,k} = 2\,\mathrm{Re}\!\left\{X_k Y_k^*\right\}\!\Big/ S_{0,k}$$

$$S_{3,k} = -\,2\,\mathrm{Im}\!\left\{X_k Y_k^*\right\}\!\Big/ S_{0,k}$$

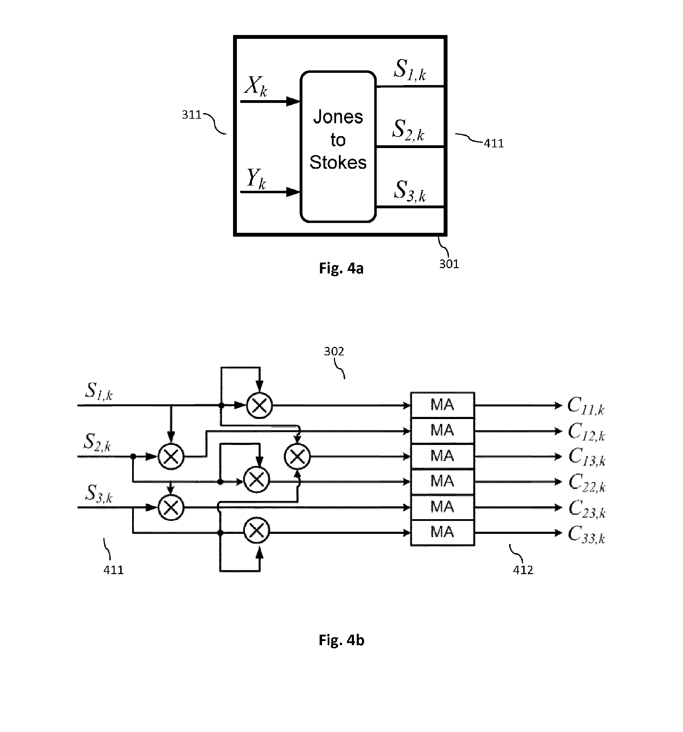

wherein k is an index indentifying a symbol at a particular time instant (in short k may be referred to as a time instant) and wherein $S_{1,k}$, $S_{2,k}$, $S_{3,k}$ are the Stokes parameters 411 which form a Stokes vector. The above mentioned transformation is performed in the Jones-to-Stokes module 301 (see Fig. 4a). As such, the Jones-to-Stokes module 301 is configured to convert a sequence of symbols $(X_k$ and $Y_k)$ 311 in the Jones space into a sequence of symbols $S_{1,k}$, $S_{2,k}$, $S_{3,k}$ 411 in the Stokes space. It should be noted that $X_k$ and $Y_k$ are complex values.

The next step is covariance matrix averaging. In other words, the sequence of symbols $S_{1,k}$, $S_{2,k}$, $S_{3,k}$ 411 in the Stokes space are used to determine covariance coefficient $C_{nm,k}$ using a moving average filter of size $N_{MA}$. A block diagram of the covariance determination unit 302 is illustrated in Fig. 4b. The covariance coefficient $C_{nm,k}$, with $n,m=1,..,$

3 are determined using the following moving average equations:

$$\text{MA: Moving average filter: } \frac{1}{2N+1}\sum_{k=-N}^{N}(\cdot)$$

$$\text{Moving average length: } N_{MA} = 2N+1$$

In the above equations, the dot (.) represents the product $S_{n,k}\,S_{m,k}$. As a result, the covariance matrix C is obtained which is symmetric and positive-definite:

$$\mathbf{C} = \begin{bmatrix} C_{11} & C_{12} & C_{13} \\ C_{12} & C_{22} & C_{23} \\ C_{13} & C_{23} & C_{33} \end{bmatrix}$$

As such, the covariance determination unit 302 is configured to determine a set of covariance coefficients $C_{nm,k}$ or a covariance matrix C for each $k$, i.e. for each time instant k. The set of covariance coefficients $C_{nm,k}$ or the covariance matrix C for time instant $k$ can be used to determine a rotation matrix for compensating XPOLM at time instant k.

For this purpose, the XPOLM compensation unit 204 makes use of linear regression axis fitting performed in the covariance analysis unit 303 (referred to as Linear Regression Axis Fitting in Fig. 3). The linear regression axis fitting may be performed based on an eigenvector / eigenvalue analysis of the covariance matrix C. For PDM-BPSK modulated signals, the eigenvector corresponding to the largest eigenvalue may be used to identify the axis in the Stokes space onto which or around which the sequence of symbols is mapped. In an ideal (i.e. undistorted) case, the PDM-BPSK symbols $X_k$ and $Y_k$ are mapped to two possible points in the Stokes space $(S_{1,k},\ S_{2,k},\ S_{3,k}) = (0,-1,0)$ and $(S_{1,k},\ S_{2,k},\ S_{3,k}) = (0,+1,0)$. The eigenvector of the covariance matrix C which corresponds to the largest eigenvalue should indicate the axis which comprises these two possible points.

This axis, i.e. this eigenvector, can be used to rotate the PDM-BPSK symbols $X_k$ and $Y_k$ at time instant k, thereby compensating for XPOLM.

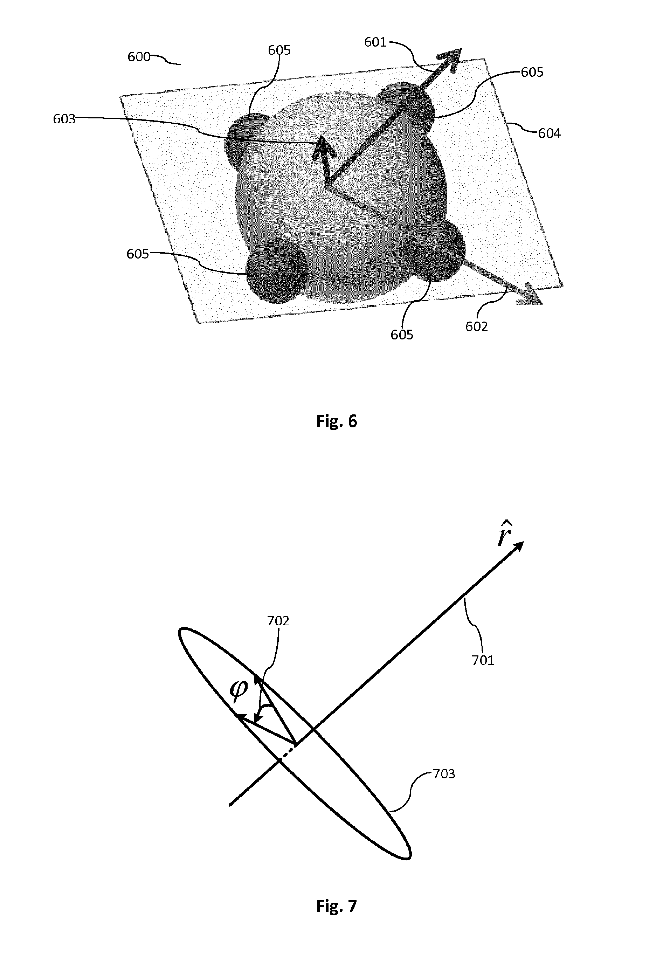

For higher order PDM-MPSK signals with M>2, e.g. PDM-QPSK, the possible constellation points lie in a plane defined by the axes $S_{2,k}$ and $S_{3,k}$ in the Stokes space. This is illustrated in the Poincaré sphere 600 of Fig. 6, where the axes $S_{2,k}$ and $S_{3,k}$ 601, 602 are shown to span the plane 604. It can be seen that the PDM-QPSK symbols form clouds 605 around the ideal constellation points which lie in the plane 604 at the points $(S_{1,k},\ S_{2,k},\ S_{3,k}) = (0,-1,1)$, $(S_{1,k},\ S_{2,k},\ S_{3,k}) = (0,1,1)$, $(S_{1,k},\ S_{2,k},\ S_{3,k}) = (0,-1,-1)$ and $(S_{1,k},\ S_{2,k},\ S_{3,k}) = (0,1,-1)$. Furthermore, the $S_1$ axis 603 is illustrated which is orthogonal to the plane 604. In the absence of XPOLM the $S_1$ axis 603 can be determined as the eigenvector of the covariance matrix C corresponding to the smallest eigenvalue. This axis 603 uniquely identifies the plan 604 and can be used to determine a rotation matrix in the case of PDM-MPSK modulated signals (M>2).

An example scheme for an efficient computation of the eigenvectors for PDM-BPSK and PDM-MSPK (M>2), e.g. PDM-QPSK, is illustrated below:

1. $\overline{C} = (C_{11} + C_{22} + C_{33})/3$
2. $D_{11} = C_{11} - \overline{C}; \ D_{22} = C_{22} - \overline{C}; \ D_{33} = C_{33} - \overline{C}$

3. $p = \left(D_{11}^2 + D_{22}^2 + D_{33}^2 + 2C_{12}^2 + 2C_{13}^2 + 2C_{23}^2\right)/6$

4. $.q = \left(D_{11}D_{22}D_{33} + 2C_{12}C_{13}C_{23} - C_{12}^2 D_{33} - C_{13}^2 D_{22} - C_{23}^2 D_{11}\right)/2$

5. $\varphi = \dfrac{1}{3}\mathrm{acos}\!\left(qp^{-3/2}\right)$

6. $\lambda = \begin{cases} \overline{C} + 2\sqrt{p}\cos\varphi & : BPSK \\ \min\!\left(\overline{C} + 2\sqrt{p}\cos\varphi, \overline{C} - 2\sqrt{p}\cos(\varphi - \pi/3), \overline{C} - 2\sqrt{p}\cos\varphi(\varphi + \pi/3)\right) & : QPSK \end{cases}$

7. $\mathbf{A} = \begin{bmatrix} C_{11} - \lambda \\ C_{12} \\ C_{13} \end{bmatrix} \qquad \mathbf{B} = \begin{bmatrix} C_{12} \\ C_{22} - \lambda \\ C_{23} \end{bmatrix}$

8. $v = \mathbf{A} \times \mathbf{B}$.

9. $\mathbf{v} \leftarrow \dfrac{\mathbf{v}}{\lVert \mathbf{v} \rVert}$

It should be noted that the direction of the eigenvectors is typically ambiguous. In order to prevent an oscillation of the direction of the eigenvectors, the following alignment scheme may be used in order to remove the ambiguity in the eigenvector direction:

If $\vec{V}_{k+1} \cdot \vec{V}_k \geq 0$ then $\vec{V}_{k+1} \leftarrow \vec{V}_{k+1}$ else $\vec{V}_{k+1} \leftarrow \vec{V}_{k+1}$

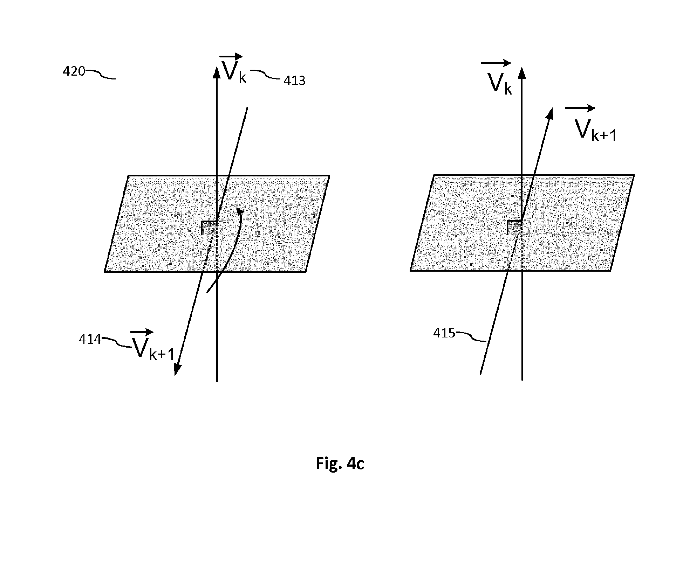

This technique may be referred to as a three-dimensional unwrap, because it is similar to the unwrap for phases but it operates in the 3-dimensional Stokes space. The unwrap technique is illustrated in the vector diagram 420 of Fig. 4c. It can be seen that if the eigenvector $v_k$ 413 has an opposed direction with respect to the succeeding eigenvector $v_{k+1}$ 414, the direction of the succeeding eigenvector $v_{k+1}$ 415 is inversed, thereby maintaining the direction of the eigenvectors.

Once the eigenvector $v_k$ 413 of the covariance matrix C (corresponding to the minimum or the maximum eigenvalue, respectively) has been determined, the Inverse Jones Matrix unit 304 (also referred to as the rotation matrix determination unit 304) determines the rotation matrix for rotating the sequence of symbols 311 in the Jones space using the rotation unit 305. The inverse Jones matrix module 304 maps the calculated eigenvector to a 2x2 complex Jones matrix *J* which is multiplied by the incoming Jones vector 311 in order to equalize the XPOLM.

The rotation matrix *J* may be determined as follows. In Stokes space, the determined eigenvector may be aligned with the $S_2$-axis in case of PDM-BPSK, and with the $S_1$-axis in case of PDM-QPSK by means of a three-dimensional rotation. Corresponding to any rotation in Stokes space, there is an equivalent two-dimensional transformation in the Jones space. It is supposed that a general three dimensional rotation is characterized by an axis 701 of rotation $\hat{r}$ and the angle 702 of rotation φ in the plane 703 perpendicular to the rotation axis 701, as shown in Fig. 7. The corresponding transformation in Jones space is:

$$\mathbf{U} = \mathbf{I}\cos(\varphi/2) - j\hat{r}\cdot\vec{\boldsymbol{\sigma}}\sin(\varphi/2)$$

where: $\mathbf{I} = \begin{bmatrix} 1 & 0 \\ 0 & 1 \end{bmatrix}$ $\boldsymbol{\sigma}_1 = \begin{bmatrix} 1 & 0 \\ 0 & -1 \end{bmatrix}$ $\boldsymbol{\sigma}_2 = \begin{bmatrix} 0 & 1 \\ 1 & 0 \end{bmatrix}$ $\boldsymbol{\sigma}_3 = \begin{bmatrix} 0 & -j \\ j & 0 \end{bmatrix}$

$\vec{\boldsymbol{\sigma}} = \left(\boldsymbol{\sigma}_1, \boldsymbol{\sigma}_2, \boldsymbol{\sigma}_3\right)^T$

It is supposed that the output of the linear regression axis-fitting module is $\vec{V}_k = \left( v_k^1, v_k^2, v_k^3 \right)^T$, wherein in case of PDM-BPSK the vector $\vec{V}_k$ should be aligned with the $S_2$ axis and wherein in case of PDM-MPSK (M>2), e.g. PDM-QPSK, the vector $\vec{V}_k$ should be aligned with the $S_1$ axis 603 perpendicular to the $S_{2,k}$, $S_{3,k}$ plane 604. That is, in case of PDM-BPSK $\varphi$ is the angle between $S_2$ axis and $\vec{V}_k$, and $\hat{r}$ is the cross product of $\vec{V}_k$ and a unit vector along the $S_2$ axis. In case of PDM-MPSK, M>2, e.g. PDM-QPSK, the $S_2$ axis is replaced by the $S_1$ axis. The Jones matrix J (also referred to as rotation matrix) for PDM-BPSK is then given by:

$$J_{BPSK} = \begin{bmatrix} J_{11} & J_{12} \\ J_{21} & J_{22} \end{bmatrix},$$

with

$$J_{11} = \cos\left[\frac{1}{2}\operatorname{acos}\left(v_k^2\right)\right] + j\frac{v_k^3}{\sqrt{\left(v_k^1\right)^2 + \left(v_k^3\right)^2}}\sin\left[\frac{1}{2}\operatorname{acos}\left(v_k^1\right)\right], \qquad J_{12} = -\frac{v_k^1}{\sqrt{\left(v_k^1\right)^2 + \left(v_k^3\right)^2}}\sin\left[\frac{1}{2}\operatorname{acos}\left(v_k^1\right)\right],$$

$$J_{21} = \frac{v_k^1}{\sqrt{\left(v_k^1\right)^2 + \left(v_k^3\right)^2}}\sin\left[\frac{1}{2}\operatorname{acos}\left(v_k^1\right)\right],$$

and $J_{22} = \cos\left[\frac{1}{2}\operatorname{acos}\left(v_k^2\right)\right] - j\frac{v_k^3}{\sqrt{\left(v_k^1\right)^2 + \left(v_k^3\right)^2}}\sin\left[\frac{1}{2}\operatorname{acos}\left(v_k^1\right)\right].$ and for PDM-MPSK (M>2), e.g. PDM-QPSK, is:

$$J_{MPSK} = \begin{bmatrix} \cos\left[\frac{1}{2}\operatorname{acos}\left(v_k^1\right)\right] & -\frac{-v_k^2 + jv_k^3}{\sqrt{\left(v_k^2\right)^2 + \left(v_k^3\right)^2}}\sin\left[\frac{1}{2}\operatorname{acos}\left(v_k^1\right)\right] \\ \frac{-v_k^2 - jv_k^3}{\sqrt{\left(v_k^2\right)^2 + \left(v_k^3\right)^2}}\sin\left[\frac{1}{2}\operatorname{acos}\left(v_k^1\right)\right] & \cos\left[\frac{1}{2}\operatorname{acos}\left(v_k^1\right)\right] \end{bmatrix}.$$

The details for the computation of the Jones matrix (rotation matrix) J are provided in Kogelnik, H.; Nelson, L.E.; Gordon, J.P., "Emulation and inversion of polarization-mode dispersion," Lightwave Technology, Journal of, vol. 21, no.2, pp. 482- 495, Feb. 2003, which is incorporated by reference.

In other words, it may be stated that the inverse Jones matrix module 304 is configured to determine an angle between the eigenvector $\vec{V}_k$ and the respective default axis (which is the $S_2$-axis in case of PDM-BPSK and the $S_1$-axis 603 in case of PDM-MPSK, M>2). Furthermore, the inverse Jones matrix module 304 is configured to determine a rotation axis around which the determined angle is to be applied. The rotation by the determined angle around the rotation axis is then transformed from the Stokes space into the Jones space, thereby yielding the above mentioned rotation matrix J. As such, the inverse Jones matrix module 304 generates a unitary transformation equivalent to the Stokes space rotation operation that brings the eigenvector $\vec{V}_k$ to the $S_2$ axis (in case of PDM-BPSK) or to the $S_1$ axis (in case of PDM-MPSK, M>2).

Finally the XPOLM compensated symbols $[\hat{X}_k, \hat{Y}_k]^T$ are calculated in the rotation unit 305 as

$$\begin{bmatrix} \hat{X}_k \\ \hat{Y}_k \end{bmatrix} = J\begin{bmatrix} X_k \\ Y_k \end{bmatrix}$$

where J is either $J_{BPSK}$ or $J_{QPSK}$.

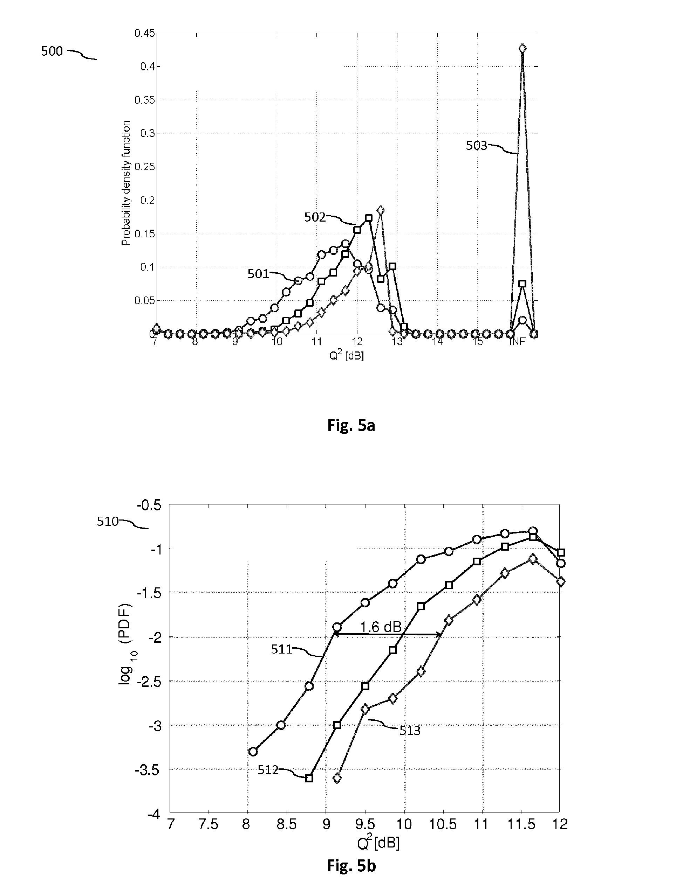

Fig. 5a shows the probability density function (pdf) 500 in linear scale using three different cases (uncompensated 501, using a decision oriented method 502 and using Blind-XpolE 503). The bin labeled INF corresponds to error-free waveforms. It can be seen that the pdf using the Blind-XpolE described in the present document yields a significant pdf for the INF bin. Fig. 5b shows the probability density function (pdf) 510 of the pdfs 500 in logarithmic scale (uncompensated 511, using the decision oriented method 512 and using Blind XPolE 513). It can be seen that at probability 10E-2 the Blind-XpolE algorithm shows a gain of 1.6dB with respect to the uncompensated case.

In absence of XPOLM, typical coherent receiver $Q^2$-factor fluctuations are below 0.5dB. However, in the presence of XPOLM $Q^2$-factor fluctuations reach up to 5dB, which is 10 times larger than the value without XPOLM. These fluctuations can be quantified by their probability distribution function (pdf). It can be seen from Figs. 5a and 5b that the use of Blind-XpolE makes about half of the measured waveforms error-free.

The proposed algorithm implements a method for correcting fast scattering around the default constellation points on the Poincaré sphere. A hypothesis of the Blind-XpolE is that, in average, the signal points in the Stokes space are on the correct constellation points, i.e., $\pm S_2$ for PDM-BPSK. This hypothesis could be false in some cases. In such cases, a dual-stage algorithm may be used. A first Blind-XpolE block with a relatively long average window $N_{MA1}$ could be followed by a second Blind-XpolE block with a shorter, properly-chosen average window length $N_{MA2}$ for XPOLM correction. The first block in this dual stage configuration averages out noise and XPOLM and is capable of correcting the average state of polarization in order to fit the requirements of the second block. The second block operates as described above, now correctly assuming that the signal is, on average, already centered on the correct constellation points.

The algorithm may be configured to self-adapt the length $N_{MA}$ for the determination of the covariance. The self-adaptation of $N_{MA}$ is possible based on the statistical analysis of the variation of the Stokes vector. For the PDM-BPSK modulation format the Stokes parameter $S_2$ may be considered. The autocorrelation of $S_2$ is a function with a peak at zero, monotonically decreasing on both positive and negative sides. The autocorrelation of $S_2$ may be determined by averaging the products $S_{2,k}S_{2,k+n}$ across k for different lags $n$. The observable two-sided full width at half maximum (FWHM) of the autocorrelation function indicates a possible value for $N_{MA}$. In case of PDM-MPSK, M>2, the autocorrelation function of the $S_1$ could be considered in a similar manner.

The algorithm can be extended to the PS-QPSK (Polarization-Shifted or Polarization-Switched QPSK) modulation format. Due to the phase correlation between the two polarization components in case of PS-QPSK, this modulation format has the same representation on the Poincaré sphere as PDM-BPSK. Since the Blind-XpolE algorithm analyzes signals in the Stokes space, it works equally well and in the same manner for PS-QPSK as for PDM-BPSK. However, the algorithm may need to be embedded into the appropriate DSP blocks for PS-QPSK. The order for the DSP blocks may be: polarization demultiplexing (which typically cannot be done with CMA because PS-QPSK is not compatible with CMA), then Blind-XpolE, and finally a phase ambiguity block that is typically required for PS-QPSK.

As already indicated above, the Blind-XpolE algorithm can be adapted for working with PDM-MPSK (M>2), e.g. PDM-QPSK, modulation formats. As shown in Fig. 6, the representation of the signal on the Poincaré sphere is different in case of PDM-MPSK (M>2). The geometrical interpretation should be modified accordingly, and the unique plane across which the PDM-QPSK constellation points are located should be identified. This corresponds to calculating the eigenvector corresponding to the minimum eigenvalue of the signal's covariance matrix. Other parts of the algorithm are the same as for PDM-BPSK. As already indicated above, the PDM-QPSK representation on the Poincaré sphere consists of four points 605 on a plane 604. Contrary to the case of PDM-BPSK, in PDM-QPSK, the Blind-XpolE 304 identifies the constellation plane 604, given through the "minimum" eigenvector of the signal's covariance matrix (indicated by the arrow 603 in Fig. 6).

In the present document, methods and systems for compensating XPOLM in optical transmission systems have been described. The methods and systems make use of a transformation from the Jones space into the Stokes space, in order to reduce the number of loci (for the different constellation points), thereby enabling the determination of reliable statistics on short observation windows, and thereby enabling the tracking and compensation of the relatively fast XPOLM phenomenon. The methods and systems can be implemented in the digital domain at relatively low computational complexity, without the need for applying an XPOLM compensation method at the optical level.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine- executable or computer- executable programs of instructions, wherein said instructions perform some or all of the steps of said above- described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above- described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A coherent optical receiver (200) adapted to receive an optical signal transmitted over an optical transmission channel exhibiting cross polarization modulation, referred to as XPOLM; wherein the received optical signal comprises a first polarization component and a second polarization component; wherein the first and second polarization components comprise sequences of $M^{ary}$ phase shift keying, referred to as MPSK, symbols, respectively, M being an integer, with M > 2; the coherent optical receiver (200) comprising

    - a conversion and processing unit (201, 202) adapted to generate a set of digital signals based on the received optical signal;
    - a polarization de-multiplexing unit (203) adapted to de-multiplex the set of digital signals into a first complex component along a first polarization axis and a second complex component along a second polarization axis; and
    - an XPOLM compensation unit (204) adapted to

        - transform the first and second complex components into the Stokes space, thereby yielding a set of Stokes parameters;
        - determine a transformation of the first and second polarization axes based on the set of Stokes parameters; and
        - determine XPOLM compensated first and second complex components by transforming the first and second complex components in accordance to the determined transformation of the first and second polarization axes.

2. The coherent optical receiver (200) of claim 1, wherein

    - the first complex component comprises a sequence of first complex samples at succeeding time instants k, k=1,...,K, K being an integer, K>1;
    - the second complex component comprises a sequence of second complex samples at the succeeding time instants k;
    - the XPOLM compensation unit (204) is adapted to

        - determine a sequence of sets of Stokes parameters at the time instants k from the sequences of first and second complex samples at the time instants k, respectively;
        - determine transformations of the first and second polarization axes at the time instants k based on the sequence of sets of Stokes parameters; and
        - determine sequences of XPOLM compensated first and second complex samples at the time instants k by transforming the sequences of first and second complex samples at the time instants k in accordance to the determined transformations of the first and second polarization axes at the time instants k, respectively.

3. The coherent optical receiver (200) of claim 2, wherein

- the set of Stokes parameters spans a three-dimensional Stokes space;
- the XPOLM compensation unit (204) is adapted to fit a subspace to the sequence of sets of Stokes parameters;
- the fitted subspace has a lower dimension than the Stokes space; and
- the XPOLM compensation unit (204) is adapted to determine the rotations of the first and second polarization axes based on the fitted subspace.

4. The coherent optical receiver (200) of any of claims 2 to 3, wherein the XPOLM compensation unit (204) is adapted to

- determine covariance coefficients of the Stokes parameters at the time instants k based on the sequence of sets of Stokes parameters at the time instants k; and
- determine an eigenvector of a covariance matrix of the Stokes parameters at the time instants k based on the determined covariance coefficients at the time instants k.

5. The coherent optical receiver (200) of claim 4, wherein

- the XPOLM compensation unit (204) is adapted to determine the covariance coefficients using a moving average across N time instants; and
- N is based on a speed of variations incurred by XPOLM.

6. The coherent optical receiver (200) of claim 5, wherein the XPOLM compensation unit (204) is adapted to

- determine an autocorrelation function of at least one of the Stokes parameters for a plurality of time lags; and
- determine N based on the autocorrelation function.

7. The coherent optical receiver (200) of any of claims 4 to 6, wherein the XPOLM compensation unit (204) is adapted to disambiguate a direction of the determined eigenvector at succeeding time instants.

8. The coherent optical receiver (200) of any of claims 4 to 7, wherein

- the received optical signal is a polarization division multiplexed, referred to as PDM, BPSK signal or a polarization switched, referred to as PS, QPSK signal; and
- the XPOLM compensation unit (204) is adapted to determine the eigenvector of the covariance matrix corresponding to a maximum eigenvalue.

9. The coherent optical receiver (200) of any of claims 4 to 7, wherein

- the received optical signal is a PDM MPSK signal with M>2; and
- the XPOLM compensation unit (204) is adapted to determine the eigenvector of the covariance matrix corresponding to a minimum eigenvalue.

10. The coherent optical receiver (200) of any of claims 4 to 9, wherein the XPOLM compensation unit (204) is adapted to

- determine an angle between the determined eigenvector and a default axis in the Stokes space;
- determine a rotation axis as an axis perpendicular to a plane spanned by the determined eigenvector and the default axis; and
- determine the rotation of the first and second polarization axes based on the angle and the rotation axis.

11. The coherent optical receiver (200) of any previous claims, wherein

- the XPOLM compensation unit (204) is adapted to determine the XPOLM compensated first and second complex components based on long-term statistics derived from the set of Stokes parameters;
- the coherent optical (200) comprises a second XPOLM compensation unit (204) adapted to

    - transform the first and second XPOLM compensated complex components into the Stokes space, thereby yielding a set of further Stokes parameters; and

- determine further XPOLM compensated first and second complex components from the first and second XPOLM compensated complex components based on short-term statistics derived from the set of further Stokes parameters;

- a time interval considered for the long-term statistics is greater than a time interval considered for the short-term statistics.

**12.** The coherent optical receiver (200) of any previous claims, wherein the first and second polarization axes are orthogonal with respect to one another.

**13.** The coherent optical receiver (200) of any previous claims, wherein

- the first and second complex components are complex components $X_k$ and $Y_k$; and
- the set of Stokes parameters comprises one or more of the last three elements of the following list

$$S_{0,k} = \left|X_k\right|^2 + \left|Y_k\right|^2$$

$$S_{1,k} = \left(\left|X_k\right|^2 - \left|Y_k\right|^2\right)\Big/S_{0,k}$$

$$S_{2,k} = 2\,\mathrm{Re}\left\{X_k Y_k^*\right\}\Big/S_{0,k}$$

$$S_{3,k} = -2\,\mathrm{Im}\left\{X_k Y_k^*\right\}\Big/S_{0,k}$$

**14.** The coherent optical receiver (200) of any previous claims, wherein

- the first and second complex components are represented in the Jones space; and
- a number of loci of the sequence of MPSK symbols in the Stokes space is reduced compared to a number of loci in the Jones space.

**15.** A method for mitigation cross polarization modulation, referred to as XPOLM, in a received optical signal; wherein the received optical signal comprises a first polarization component and a second polarization component; wherein the first and second polarization components comprise sequences of M-ary phase shift keying, referred to as MPSK, symbols, respectively, M being an integer, with M > 2; the method comprising

- generating a set of digital signals based on the received optical signal;
- de-multiplexing the set of digital signals into a first two dimensional, referred to as complex, component in a first polarization axis and a second complex component in a second polarization axis;
- transforming the first and second complex components into the Stokes space, thereby yielding a set of Stokes parameters;
- determining a rotation of the first and second polarization axes based on the set of Stokes parameters; and
- determining XPOLM compensated first and second complex components by rotating the first and second complex components in accordance to the determined rotation of the first and second polarization axes.

**Amended claims in accordance with Rule 137(2) EPC.**

**1.** A coherent optical receiver (200) adapted to receive an optical signal transmitted over an optical transmission channel exhibiting cross polarization modulation, referred to as XPOLM; wherein the received optical signal comprises a first polarization component and a second polarization component; wherein the first and second polarization components comprise sequences of M$^{ary}$ phase shift keying, referred to as MPSK, symbols, respectively, M being an integer, with M > 2, **characterized in that** the coherent optical receiver (200) comprises

- a conversion and processing unit (201, 202) adapted to generate a set of digital signals based on the received optical signal;
- a polarization de-multiplexing unit (203) adapted to de-multiplex the set of digital signals into a first complex component along a first polarization axis and a second complex component along a second polarization axis; and
- an XPOLM compensation unit (204) adapted to

- transform the first and second complex components into the Stokes space, thereby yielding a set of Stokes parameters;
- determine a transformation of the first and second polarization axes based on the set of Stokes parameters; and
- determine XPOLM compensated first and second complex components by transforming the first and second complex components in accordance to the determined transformation of the first and second polarization axes.

2. The coherent optical receiver (200) of claim 1, wherein

- the first complex component comprises a sequence of first complex samples at succeeding time instants k, k=1,...,K, K being an integer, K>1;
- the second complex component comprises a sequence of second complex samples at the succeeding time instants k;
- the XPOLM compensation unit (204) is adapted to

- determine a sequence of sets of Stokes parameters at the time instants k from the sequences of first and second complex samples at the time instants k, respectively;
- determine transformations of the first and second polarization axes at the time instants k based on the sequence of sets of Stokes parameters; and
- determine sequences of XPOLM compensated first and second complex samples at the time instants k by transforming the sequences of first and second complex samples at the time instants k in accordance to the determined transformations of the first and second polarization axes at the time instants k, respectively.

3. The coherent optical receiver (200) of claim 2, wherein

- the set of Stokes parameters spans a three-dimensional Stokes space;
- the XPOLM compensation unit (204) is adapted to fit a subspace to the sequence of sets of Stokes parameters;
- the fitted subspace has a lower dimension than the Stokes space; and
- the XPOLM compensation unit (204) is adapted to determine the rotations of the first and second polarization axes based on the fitted subspace.

4. The coherent optical receiver (200) of any of claims 2 to 3, wherein the XPOLM compensation unit (204) is adapted to

- determine covariance coefficients of the Stokes parameters at the time instants k based on the sequence of sets of Stokes parameters at the time instants k; and
- determine an eigenvector of a covariance matrix of the Stokes parameters at the time instants k based on the determined covariance coefficients at the time instants k.

5. The coherent optical receiver (200) of claim 4, wherein

- the XPOLM compensation unit (204) is adapted to determine the covariance coefficients using a moving average across N time instants; and
- N is based on a speed of variations incurred by XPOLM.

6. The coherent optical receiver (200) of claim 5, wherein the XPOLM compensation unit (204) is adapted to

- determine an autocorrelation function of at least one of the Stokes parameters for a plurality of time lags; and

- determine N based on the autocorrelation function.

**7.** The coherent optical receiver (200) of any of claims 4 to 6, wherein the XPOLM compensation unit (204) is adapted to disambiguate a direction of the determined eigenvector at succeeding time instants.

**8.** The coherent optical receiver (200) of any of claims 4 to 7, wherein

- the received optical signal is a polarization division multiplexed, referred to as PDM, BPSK signal or a polarization switched, referred to as PS, QPSK signal; and
- the XPOLM compensation unit (204) is adapted to determine the eigenvector of the covariance matrix corresponding to a maximum eigenvalue.

**9.** The coherent optical receiver (200) of any of claims 4 to 7, wherein

- the received optical signal is a PDM MPSK signal with M>2; and
- the XPOLM compensation unit (204) is adapted to determine the eigenvector of the covariance matrix corresponding to a minimum eigenvalue.

**10.** The coherent optical receiver (200) of any of claims 4 to 9, wherein the XPOLM compensation unit (204) is adapted to

- determine an angle between the determined eigenvector and a default axis in the Stokes space;
- determine a rotation axis as an axis perpendicular to a plane spanned by the determined eigenvector and the default axis; and
- determine the rotation of the first and second polarization axes based on the angle and the rotation axis.

**11.** The coherent optical receiver (200) of any previous claims, wherein

- the XPOLM compensation unit (204) is adapted to determine the XPOLM compensated first and second complex components based on long-term statistics derived from the set of Stokes parameters;
- the coherent optical (200) comprises a second XPOLM compensation unit (204) adapted to

  - transform the first and second XPOLM compensated complex components into the Stokes space, thereby yielding a set of further Stokes parameters; and
  - determine further XPOLM compensated first and second complex components from the first and second XPOLM compensated complex components based on short-term statistics derived from the set of further Stokes parameters;

- a time interval considered for the long-term statistics is greater than a time interval considered for the short-term statistics.

**12.** The coherent optical receiver (200) of any previous claims, wherein the first and second polarization axes are orthogonal with respect to one another.

**13.** The coherent optical receiver (200) of any previous claims, wherein

- the first and second complex components are complex components $X_k$ and $Y_k$; and
- the set of Stokes parameters comprises one or more of the last three elements of the following list

$$S_{0,k} = \left|X_k\right|^2 + \left|Y_k\right|^2$$

$$S_{1,k} = \left(\left|X_k\right|^2 - \left|Y_k\right|^2\right)/S_{0,k}$$

$$S_{2,k} = 2\,\mathrm{Re}\{X_k Y_k^*\}/S_{0,k}$$

$$S_{3,k} = -2\,\mathrm{Im}\{X_k Y_k^*\}/S_{0,k}$$

**14.** The coherent optical receiver (200) of any previous claims, wherein

- the first and second complex components are represented in the Jones space; and
- a number of loci of the sequence of MPSK symbols in the Stokes space is reduced compared to a number of loci in the Jones space.

**15.** A method for mitigation cross polarization modulation, referred to as XPOLM, in a received optical signal; wherein the received optical signal comprises a first polarization component and a second polarization component; wherein the first and second polarization components comprise sequences of M$^{ary}$ phase shift keying, referred to as MPSK, symbols, respectively, M being an integer, with M > 2, **characterized in that** the method comprises

- generating a set of digital signals based on the received optical signal;
- de-multiplexing the set of digital signals into a first two dimensional, referred to as complex, component in a first polarization axis and a second complex component in a second polarization axis;
- transforming the first and second complex components into the Stokes space, thereby yielding a set of Stokes parameters;
- determining a rotation of the first and second polarization axes based on the set of Stokes parameters; and
- determining XPOLM compensated first and second complex components by rotating the first and second complex components in accordance to the determined rotation of the first and second polarization axes.

Fig. 1a

Fig. 1b

Fig. 2a

Fig. 2b

204

**Stokes space**

Covariance
Matrix
Averaging

Linear
Regression
Axis Fitting

304

302

303

Jones
to
Stokes

Inverse
Jones
Matrix

Jones
Vector
IN

301

311

Jones
Vector
OUT

312

**Jones space**

305

**Fig. 3**

**Fig. 4a**

**Fig. 4b**

**Fig. 4c**

**Fig. 5a**

**Fig. 5b**

**Fig. 6**

**Fig. 7**

Europäisches
Patentamt

European
Patent Office

Office européen
des brevets

## EUROPEAN SEARCH REPORT

Application Number

EP 12 30 5439

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 782 211 B1 (CORE MARK T [US]) 24 August 2004 (2004-08-24) * column 10, line 7 - column 14, line 11; figure 6 * ----- | 1-15 | INV. H04B10/148 |
| Y | US 2010/322639 A1 (SZAFRANIEC BOGDAN [US] ET AL) 23 December 2010 (2010-12-23) * column 39; figures 1,3 * * paragraph [0039]; figure 1 * ----- | 1-15 | |
| Y | MARY R PHILLIPS ET AL: "Cross-Polarization Modulation: Theory and Measurement in Subcarrier-Modulated WDM Systems", JOURNAL OF LIGHTWAVE TECHNOLOGY, IEEE SERVICE CENTER, NEW YORK, NY, US, vol. 24, no. 11, 1 November 2006 (2006-11-01), pages 4089-4099, XP011150143, ISSN: 0733-8724, DOI: 10.1109/JLT.2006.883638 * Abstract I Introduction II Model of cross polarization modulation * ----- -/-- | 1-15 | TECHNICAL FIELDS SEARCHED (IPC) H04B |

The present search report has been drawn up for all claims

| Place of search | Date of completion of the search | Examiner |
|---|---|---|
| Munich | 2 October 2012 | De Vries, Jane |

EPO FORM 1503 03.82 (P04C01)

| | Europäisches Patentamt<br>European Patent Office<br>Office européen des brevets | **EUROPEAN SEARCH REPORT** | **Application Number**<br>EP 12 30 5439 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | LEI LI ET AL: "Nonlinear polarization crosstalk canceller for dual-polarization digital coherent receivers",<br>OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA,<br>21 March 2010 (2010-03-21), pages 1-3,<br>XP031677011,<br>* Section 2. Characteristics of Nonlinear Polarization Corsstalk<br>Section 3. Digital Cancellation for Nonliear Polarization Crosstalk<br>Section 4. Performance of Nonliear Polarization Crosstalk Canceller * | 1-15 | |
| A | MILLAR D S ET AL: "Mitigation of Fiber Nonlinearity Using a Digital Coherent Receiver",<br>IEEE JOURNAL OF SELECTED TOPICS IN QUANTUM ELECTRONICS, IEEE SERVICE CENTER, PISCATAWAY, NJ, US,<br>vol. 16, no. 5,<br>1 September 2010 (2010-09-01), pages 1217-1226, XP011337418,<br>ISSN: 1077-260X, DOI:<br>10.1109/JSTQE.2010.2047247<br>* Abstract<br>I. Introduction<br>II. Digital backpropagation * | 1-15 | TECHNICAL FIELDS<br>SEARCHED (IPC) |

The present search report has been drawn up for all claims

| Place of search | Date of completion of the search | Examiner |
|---|---|---|
| Munich | 2 October 2012 | De Vries, Jane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ................................................................................................

& : member of the same patent family, corresponding
    document

EPO FORM 1503 03.82 (P04C01)

EP 2 651 051 A1

**ANNEX TO THE EUROPEAN SEARCH REPORT
ON EUROPEAN PATENT APPLICATION NO.**

EP 12 30 5439

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2012

| Patent document cited in search report | | Publication date | Patent family member(s) | | Publication date |
|---|---|---|---|---|---|
| US 6782211 | B1 | 24-08-2004 | NONE | | |
| US 2010322639 | A1 | 23-12-2010 | CN | 101931457 A | 29-12-2010 |
| | | | US | 2010322639 A1 | 23-12-2010 |

For more details about this annex : see Official Journal of the European Patent Office, No. 12/82

EP 2 651 051 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **GODARD.** *IEEE Tr. Comm,* 1980, vol. 28 (11), 1867-1875
- **S.J. SAVORY et al.** Digital Equalization of 40Gbit/s per Wavelength Transmission over 2480km of Standard Fiber without Optical Dispersion Compensation. *Proceedings of ECOC 2006, Cannes, France,* September 2006

- **KOGELNIK, H. ; NELSON, L.E. ; GORDON, J.P.** Emulation and inversion of polarization-mode dispersion. *Lightwave Technology, Journal,* February 2003, vol. 21 (2), 482-495